Europäisches Patentamt

(19) European Patent Office

Office européen des brevets

(11) Publication number: **0 104 694**

**A1**

(12) # EUROPEAN PATENT APPLICATION

(21) Application number: **83201284.3**

(22) Date of filing: **06.09.83**

(51) Int. Cl.³: **B 23 D 5/02**
**B 23 D 37/16**

(30) Priority: **08.09.82 NL 8203489**

(43) Date of publication of application:
**04.04.84 Bulletin 84/14**

(84) Designated Contracting States:
**AT DE FR GB NL**

(71) Applicant: **N.V. Philips' Gloeilampenfabrieken**
**Groenewoudseweg 1**
**NL-5621 BA Eindhoven(NL)**

(72) Inventor: **Schout, Arnoldus Renatus Clementinus**
**c/o INT. OCTROOIBUREAU B.V. Prof. Holstlaan 6**
**NL-5656 AA Eindhoven(NL)**

(72) Inventor: **Tielemans, Leonardus Petrus Maria**
**c/o INT. OCTROOIBUREAU B.V. Prof. Holstlaan 6**
**NL-5656 AA Eindhoven(NL)**

(74) Representative: **Melio, Jan Dirk et al,**
**INTERNATIONAAL OCTROOIBUREAU B.V. Prof.**
**Holstlaan 6**
**NL-5656 AA Eindhoven(NL)**

(54) Method of manufacturing the housing of a spiral-groove bearing.

(57) In a method of manufacturing the housing (8, 18) of a spiral-groove bearing, in which the wall of a cylindrical bore (7, 17) in the housing is provided with a number of helical grooves, a shaft (1, 11) provided with at least three pins (3, 13) which are regularly distributed around the circumference of the shaft and project radially outwards therefrom and the free ends of which are located on a circle having a diameter which is slightly larger than the diameter of the bore (7, 17), is passed through the bore with a combined rotary and axial movement to form helical grooves in the wall of the bore, said wall being machined at the same time so that the bore has the desired diameter between the grooves.

FIG.1

PHN 10433                                1                    **0104694**
                                                                31-5-1983

"Method of manufacturing the housing of a spiral-groove
bearing".

The invention relates to a method of manufacturing
the housing of a spiral-groove bearing, in which the wall
of a cylindrical bore in the housing is provided with a
number of helical grooves.

Hydrodynamic spiral-groove bearings comprising
such a housing are described in, for example, GB-PS
1,022,391 and GB-PS 1,163,018. The grooves must be provided
in the housing with great accuracy and this is a serious
problem in the mass production of bearings of this kind.

A known method described in GB-PS 1,194,425 comprises the step of cutting the grooves with a cutting
tool especially designed for this purpose. This method is
not suitable for mass production. It has also been proposed to form the grooves by means of a photo-chemical
process, but this process also is not very suitable for
mass production.

A further manufacturing method is described in
EP-PS 0.002,292. In this method, the bore in the housing
is first-rough-turned, after which the grooves are rolled
in the wall of the bore by means of a special tool and then
the bore is finish-turned in order to remove the proud
edges of the rolled grooves. This method is also rather
time-consuming and is comparatively expensive.

The invention has for its object to provide a
method by means of which housings of spiral-groove bearings
can be provided with grooves in a rapid, accurate and
reproducible manner.

The method according to the invention is characterized in that a shaft which is provided in a circumferential zone thereof with at least three pins which are
distributed regularly around the circumference of the shaft
and project radially outwards therefrom and whose free
ends lie on a circle having a diameter which is larger than the diameter of the bore, is passed through the bore with a combined rotary and axial movement to form helical grooves in the wall of the bore, said wall being simultaneously machined so that the bore has the desired diameter between the grooves.

In this manner, in a single processing step, a housing of a spiral-groove bearing is obtained which need not be subjected to further finishing treatments.

In a favourable embodiment of the method, on at least one side of the zone in which the pins are located the shaft is constructed in a further circumferential zone as a broach having a maximum diameter which corresponds to the desired diameter of the bore between the grooves.

In, this embodiment, the material forced up by the pins in forming the grooves is cut away by the broach so that the housing is finished in a single step.

According to another favourable embodiment, in the zone in which the pins are located the shaft is given a diameter which is equal to or slightly larger than the initial diameter

In this embodiment of the method, the housing is deformed more or less plastically, the material forced up by the pins being uniformly distributed over the entire wall of the bore and a smooth cylindrical bore with helical grooves being obtained.

In order to be able to pass the shaft through the bore in an accurately centred position, on each side of the zone in which the pins are located the shaft may have a centering zone in which the diameter of the shaft corresponds to or is slightly smaller than that of the first=mentioned zone.

The invention will be described more fully with reference to the drawings.

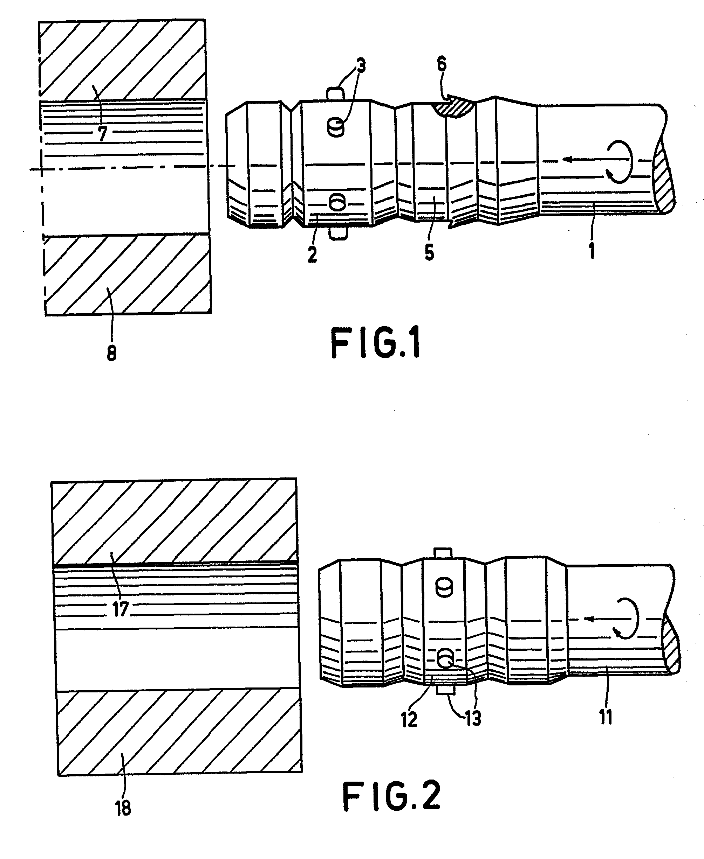

Fig. 1 and 2, show partly in section and partly in elevation two methods of providing helical grooves in a bearing housing.

In Fig. 1, reference numeral 1 designates a shaft which is provided in a circumferential zone 2 with six pins 3 projecting radially outwards from the shaft and regularly distributed around the circumference thereof. On one side of the zone 2 is a circumferential zone 5 in which the shaft is constructed as a broach and is provided at its outer surface with a cutting edge 6.

The shaft 1 can be mounted in a mounting device (not shown further) of a machine which can impart a combined rotary and axial movement to the shaft. By this movement the shaft is passed through the cylindrical bore 7 of a bearing housing 8. The bore 7 has a diameter which is smaller than the diameter of a circle on which the face ends of the pins 3 are located. Consequently, the pins 3 will plough through the material of the housing and will thereby produce helical grooves with slightly proud edges in the wall of the bore 7. The pins are immediately followed by the broach 5, 6 which cuts away the proud edges so that after one pass of the shaft a completely finished bearing housing with helical grooves is obtained.

Fig. 2 again shows a method of providing helical grooves in a bearing housing. A shaft 11 is provided in a circumferential zone 12 with a plurality of radially projecting pins 13. The diameter of the shaft in the zone 12 is now equal to or slightly larger than the initial diameter of the cylindrical bore 17 of the bearing housing 18. Circumferential zones 14 and 15, which serve to guide the shaft 11 in the housing 18 and to centre it therein, are located on opposite sides of the zone 12. When the shaft is passed through the bore 17, the pins 13 will force helical grooves in the material of the bearing housing. However, proud edges cannot be formed now because the zone 12 fits closely in the bore 17 so that the formation of proud edges is prevented. The housing 18 is partly deformed plastically. When the zone 12 has passed through the bearing housing, helical grooves are left in the wall of the bore 17 and the diameter of the bore between the grooves corresponds to the desired value. Consequently, also in this manner, a spiral-groove bearing housing is obtained in a single processing step.

**CLAIMS**

1. A method of manufacturing the housing of a spiral-groove bearing, in which the wall of a cylindrical bore in the housing is provided with a number of helical grooves, characterized in that a shaft which is provided in a circumferential zone thereof with at least three pins which are regularly distributed around the circumference of the shaft and project radially outwards therefrom and the free ends of which lie on a circle having a diameter which is larger than the diameter of the bore, is passed through the bore with a combined rotary and axial movement to form helical grooves in the wall of the bore, said wall being simultaneously machined so that the bore has the desired diameter between the grooves.

2. A method as claimed in Claim 1, characterized in that on at least one side of the zone in which the pins are located the shaft is constructed in a further circumferential zone as a broach having a maximum outer diameter which corresponds to the desired diameter of the bore between the grooves.

3. A method as claimed in Claim 1, characterized in that in the zone in which the pins are located the shaft is given a diameter which is equal to or slightly larger than the initial diameter of the bore.

4. A method as claimed in Claim 3, characterized in that on each side of the zone in which the pins are located the shaft has a circumferential centering zone in which the diameter of the shaft is equal to or slightly smaller than its diameter in the first-mentioned zone.

5. A housing of a spiral-groove bearing, manufactured by the method claimed in any of the preceding Claims.

FIG.1

FIG.2

0104694

European Patent
Office

**EUROPEAN SEARCH REPORT**

Application number

EP 83 20 1284

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-C- 709 459 (MAUSER-WERKE) <br> * Page 2, lines 16-43; figures * | 1,5 | B 23 D 5/02 <br> B 23 D 37/16 |
| A | DE-C- 108 195 (EHRHARDT) | 1 | |
| A | US-A-2 003 185 (GERLICH) | 1 | |
| A | FR-A-2 122 171 (LA SALLE) | 1 | |
| A | GB-A- 572 893 (LALOUX) | 1 | |
| A | DE-C- 708 183 (BORN) | 1 | |
| | | | TECHNICAL FIELDS SEARCHED (Int. Cl. ³) |
| | | | B 23 B 5/00 <br> B 23 D 5/00 <br> B 23 D 13/00 <br> B 23 D 37/00 <br> B 23 D 43/00 |

The present search report has been drawn up for all claims

| Place of search | Date of completion of the search | Examiner |
|---|---|---|
| THE HAGUE | 07-12-1983 | HORVATH R.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82